(19) Europäisches Patentamt
European Patent Office
Office européen des brevets

(11) **EP 4 787 522 A1**

(12) **EUROPEAN PATENT APPLICATION**
published in accordance with Art. 153(4) EPC

(43) Date of publication:
05.08.2026 Bulletin 2026/32

(21) Application number: 24895490.1

(22) Date of filing: 28.05.2024

(51) International Patent Classification (IPC):
$H01M\ 10/0525^{(2010.01)}$    $H01M\ 4/133^{(2010.01)}$
$H01M\ 4/13^{(2010.01)}$

(52) Cooperative Patent Classification (CPC):
H01M 4/13; H01M 4/133; H01M 10/0525;
Y02E 60/10

(86) International application number:
PCT/CN2024/095830

(87) International publication number:
WO 2025/112380 (05.06.2025 Gazette 2025/23)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 30.11.2023 CN 202311643117

(71) Applicant: Contemporary Amperex Technology
Co., Limited
Ningde, Fujian 352100 (CN)

(72) Inventors:
• WU, Kai
Ningde, Fujian 352100 (CN)
• LI, Lianchuan
Ningde, Fujian 352100 (CN)
• LI, Yuanyuan
Ningde, Fujian 352100 (CN)
• SHEN, Rui
Ningde, Fujian 352100 (CN)
• HE, Libing
Ningde, Fujian 352100 (CN)

(74) Representative: Lorenz Seidler Gossel Part. mbB
Widenmayerstr. 23
80538 München (DE)

(54) **SECONDARY BATTERY AND ELECTRIC DEVICE**

(57) A secondary battery and an electric device. The secondary battery comprises a negative electrode sheet; the negative electrode sheet comprises a negative electrode current collector and a negative electrode film layer located on at least one surface of the negative electrode current collector and comprising a negative electrode active material; the negative electrode active material comprises a first carbon-based material and a second carbon-based material; the first carbon-based material comprises artificial graphite of secondary particles; the second carbon-based material comprises an outer region and an inner region located on the inner side of the outer region; the outer region refers to a region extending from the particle surface of the second carbon-based material to the interior of the particle by a distance of 2.5 $\mu$m; and in the cross-sectional view of the second carbon-based material, the total pore area of the outer region is denoted as S1, the total pore area of the inner region is denoted as S2, and S2 is greater than S1.

FIG. 1

## Description

CROSS-REFERENCE TO RELATED APPLICATION

The present disclosure is presented based on Chinese Patent Application No. 202311643117.7, filed on November 30, 2023 and entitled "SECONDARY BATTERY AND ELECTRIC DEVICE", and claims priority to the Chinese Patent Application, the content of which is incorporated herein by reference in its entirety.

TECHNICAL FIELD

The present disclosure relates to the technical field of batteries, and in particular, to a secondary battery and an electric device.

BACKGROUND

In recent years, secondary batteries have been widely used in energy storage power systems such as hydropower, thermal power, wind power, and solar power stations, as well as in various fields such as electric tools, electric bicycles, electric motorcycles, electric vehicles, and aerospace. As the application range of secondary batteries becomes increasingly widespread, higher demands have been imposed on the performance of secondary batteries, especially cycle performance.

Therefore, how to improve the cycle performance of secondary batteries has become an urgent problem to be solved in the art.

SUMMARY

The present disclosure is made in view of the above problem, and an objective thereof is to provide a secondary battery and an electric device. The secondary battery exhibits excellent cycle performance.

A first aspect of the present disclosure provides a secondary battery. The secondary battery includes a negative electrode plate. The negative electrode plate includes a negative electrode current collector and a negative electrode film layer located on at least one surface of the negative electrode current collector and including a negative electrode active material. The negative electrode active material includes a first carbon-based material and a second carbon-based material. The first carbon-based material includes artificial graphite in the form of secondary particles, and the second carbon-based material includes an external region and an internal region located on an inner side of the external region. The external region refers to a region formed by extending from a surface of a particle of the second carbon-based material to an interior of the particle by a distance of 2.5 $\mu$m. In a cross-sectional view of the second carbon-based material, a total pore area of the external region is denoted as S1, a total pore area of the internal region is denoted as S2, and S2 is greater than S1.

In the present disclosure, the negative electrode active material includes the first carbon-based material and the second carbon-based material described above. The first carbon-based material is the artificial graphite in the form of the secondary particles, and the secondary particles exhibit a high degree of isotropy, resulting in little expansion during cycling and a more stable electrode plate structure, which is beneficial for reducing side reactions during cycling and improving the cycle performance of the cell. In addition, S2 of the second carbon-based material is greater than S1, indicating that the structure of the external region of the carbon-based material is denser than that of the internal region. The dense surface structure feature helps to reduce the consumption of active lithium, thereby improving the cycle performance of the secondary battery.

In some embodiments, Occhio roughness of the second carbon-based material is less than Occhio roughness of the first carbon-based material. The artificial graphite in the form of the secondary particles has a relatively large Occhio roughness, with numerous edges and corners on the surface and a relatively large particle size. In addition, the second carbon-based material has a relatively small Occhio roughness, indicating that the surface is relatively smooth and the particle size is relatively small. In the present disclosure, by combining the first carbon-based material and the second carbon-based material, graphite particles with different particle sizes and different roughness are mixed together, such that the prepared negative electrode plate can form a better particle stacking effect during cold pressing. This increases the contact area between the particles and improves the adhesion, such that the negative electrode plate achieves higher cohesion. As a result, the expansion of the electrode plate during the graphite ring process can be suppressed, which can further improve the cycle performance of the secondary battery.

In some embodiments, the Occhio roughness of the first carbon-based material is greater than or equal to 0.20, optionally 0.25 to 0.40; and/or the Occhio roughness of the second carbon-based material is less than or equal to 0.28, optionally 0.08 to 0.25. By setting the Occhio roughnesses of the first carbon-based material and the second carbon-based material, respectively, within the above ranges, the particles of the first carbon-based material have numerous edges and corners and a relatively large particle size, while the second carbon-based material has a relatively smooth surface and a relatively small particle size. The combination of the two is more beneficial for achieving higher cohesion of the negative electrode active material, thereby suppressing the expansion of the electrode plate.

In some embodiments, a specific surface area of the first carbon-based material is $1.1 \, m^2/g$ to $2.5 \, m^2/g$, optionally $1.2 \, m^2/g$ to $2.0 \, m^2/g$; and/or a specific surface area of the second carbon-based material is $1.0 \, m^2/g$ to $2.1 \, m^2/g$, optionally $1.3 \, m^2/g$ to $1.9 \, m^2/g$. By setting the specific surface area of the first carbon-based material and the specific surface area of the second carbon-based material within the above ranges, the consumption of active ions due to the formation of SEI film can be reduced, thereby helping to improve the cycle performance of the secondary battery.

In some embodiments, a specific capacity of the first carbon-based material is less than a specific capacity of the second carbon-based material. In some embodiments, the specific capacity of the first carbon-based material is 340 mAh/g to 360 mAh/g, optionally 345 mAh/g to 358 mAh/g; and/or the specific capacity of the second carbon-based material is 358 mAh/g to 372 mAh/g, optionally 365 mAh/g to 372 mAh/g. By setting the specific capacities of the first carbon-based material and the second carbon-based material within the above ranges, the secondary battery can achieve a high volumetric energy density.

In some embodiments, a number proportion of the artificial graphite in the form of the secondary particles in the first carbon-based material is greater than or equal to 60%, optionally 70% to 85%. By allowing a large number proportion of the artificial graphite in the form of the secondary particles in the first carbon-based material, high isotropy can be achieved, which can effectively suppress the expansion of the electrode plate during cycling and improve the cycle performance of the battery.

In some embodiments, a degree of graphitization of the first carbon-based material is less than a degree of graphitization of the second carbon-based material. The degree of graphitization of the first carbon-based material is 90.0% to 95.0%, optionally 92.0% to 94.0%; and/or the degree of graphitization of the second carbon-based material is 95.0% to 98.0%, optionally 95.5% to 97.5%. Therefore, the negative electrode exhibits a high specific capacity and a high powder compaction density.

In some embodiments, a volume distribution particle size Dv50 of the first carbon-based material is less than a volume distribution particle size Dv50 of the second carbon-based material. In some embodiments, the volume distribution particle size Dv50 of the first carbon-based material is 8 $\mu$m to 18.0 $\mu$m, optionally 10 $\mu$m to 16 $\mu$m; and/or the volume distribution particle size Dv50 of the second carbon-based material is 10.0 $\mu$m to 20.0 $\mu$m, optionally 12.0 $\mu$m to 18.0 $\mu$m. Therefore, the specific surface area of the carbon-based material is low, which is beneficial for achieving high initial coulombic efficiency of the battery.

In some embodiments, an area of a pore structure in the external region of the second carbon-based material is less than or equal to 0.15 $\mu m^2$, optionally less than or equal to 0.13 $\mu m^2$; and/or the internal region of the second carbon-based material includes one or more pore structures with an area greater than or equal to 0.15 $\mu m^2$, and optionally includes one or more pore structures with an area of 0.15 $\mu m^2$ to 2.0 $\mu m^2$. By forming an externally dense and internally porous structure, the expansion of the electrode plate during cycling can be alleviated while the initial coulombic efficiency is improved, thereby improving the stability in the cycling process.

In some embodiments, $1.5 \leq S2/S1 \leq 500$, and $2 \leq S2/S1 \leq 450$. Therefore, this can further improve the cycle performance of the secondary battery.

In some embodiments, the second carbon-based material includes primary particles. Optionally, a number proportion of the primary particles in the second carbon-based material is greater than or equal to 80%. Therefore, high structural stability can be achieved, and the occurrence of side reactions can be reduced, thereby improving the cycle performance of the secondary battery.

In some embodiments, the first carbon-based material satisfies at least one of the following conditions: (1) powder compaction density of the first carbon-based material under a pressure of 50,000 N is greater than or equal to 1.85 $g/cm^3$, optionally 1.88 $g/cm^3$ to 2.00 $g/cm^3$; (2) tap density of the first carbon-based material is 0.8 $g/cm^3$ to 1.1 $g/cm^3$, optionally 0.85 $g/cm^3$ to 1.05 $g/cm^3$; (3) [(Dv90)-(Dv10)]/(Dv50)] of the first carbon-based material is 0.8 to 1.5, optionally 0.9 to 1.4; and (4) an adsorption amount of linseed oil by 100 g of the first carbon-based material is 50 ml to 70 ml, optionally 55 ml to 65 ml. By allowing the first carbon-based material to meet at least one of the above conditions, it is more beneficial for improving the energy density, charging capacity, and cycle performance of the secondary battery.

In some embodiments, the second carbon-based material satisfies at least one of the following conditions: (1) powder compaction density of the second carbon-based material under a pressure of 50,000 N is 1.80 $g/cm^3$ to 2.10 $g/cm^3$, optionally 1.85 $g/cm^3$ to 2.08 $g/cm^3$; (2) tap density of the second carbon-based material is 0.95 $g/cm^3$ to 1.30 $g/cm^3$, optionally 1.00 $g/cm^3$ to 1.25 $g/cm^3$; (3) [(Dv90)-(Dv10)]/(Dv50)] of the second carbon-based material is 0.70 to 1.10, optionally 0.75 to 1.05; (4) a volume particle size Dv90 of the second carbon-based material is 13.0 $\mu$m to 30.0 $\mu$m, optionally 16.0 $\mu$m to 25.0 $\mu$m; and (5) an adsorption amount of linseed oil by 100 g of the second carbon-based material is 40 mL to 60 mL, optionally 40 mL to 55 mL. By allowing the second carbon-based material to meet at least one of the above conditions, it is more beneficial for improving the energy density, charging capacity, and cycle performance of the secondary battery.

In some embodiments, a content of the second carbon-based material in the negative electrode active material is 20 wt% to 80 wt%, optionally 40 wt% to 60 wt%. By setting the content of the second carbon-based material within the above range, it is more beneficial for improving the cycle performance of the secondary battery.

In some embodiments, the negative electrode active material further includes a silicon-based material; and optionally, in the negative electrode active material, a content of the silicon-based material is greater than or equal to 5 wt%, more optionally 10 wt% to 30 wt%.

A second aspect of the present disclosure provides an electric device. The electric device includes the secondary battery according to the first aspect of the present disclosure.

## ADVANTAGEOUS EFFECTS OF INVENTION

The secondary battery of the present disclosure exhibits excellent cycle performance.

## BRIEF DESCRIPTION OF THE DRAWINGS

In order to more clearly illustrate the technical solutions of embodiments of the present disclosure, the drawings required to be used in the embodiments of the present disclosure are briefly described below. Apparently, the drawings in the following description illustrate merely some embodiments of the present disclosure, and those of ordinary skill in the art may still derive other drawings from these drawings without creative efforts.

FIG. 1 is a schematic diagram of a cross-sectional image of a particle of a second carbon-based material according to the present disclosure.

FIG. 2 is a scanning electron microscope (SEM) image of a first carbon-based material according to an embodiment of the present disclosure.

FIG. 3 is an ion-polished cross section (CP) image of a second carbon-based material according to an embodiment of the present disclosure.

FIG. 4 is a schematic diagram of a secondary battery according to an embodiment of the present disclosure.

FIG. 5 is a schematic exploded view of a secondary battery according to an embodiment of the present disclosure.

FIG. 6 is a schematic diagram of a battery module according to an embodiment of the present disclosure.

FIG. 7 is a schematic diagram of a battery pack according to an embodiment of the present disclosure.

FIG. 8 is a schematic exploded view of the embodiment of the battery pack shown in FIG. 7.

FIG. 9 is a schematic diagram of an electric device including the secondary battery according to an embodiment of the present disclosure as a power source.

The drawings are not necessarily drawn to scale. Reference numerals are as follows: 1: battery pack; 2: upper case body; 3: lower case body; 4: battery module; 5: secondary battery; 51: housing; 52: electrode assembly; 53: cover plate; 100: second carbon-based material; 101: external region; 102: internal region.

## DETAILED DESCRIPTION

Hereinafter, embodiments of the secondary battery and the electric device of the present disclosure are specifically disclosed in detail with appropriate reference to the drawings. However, unnecessarily detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present disclosure and are not intended to limit the subject matter recited in the claims.

The "ranges" disclosed in the present disclosure are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60 to 120 and 80 to 110 are listed for a particular parameter, it is understood that ranges of 60 to 110 and 80 to 120 are also anticipated. Additionally, if the minimum range values listed are 1 and 2, and the maximum range values listed are 3, 4, and 5, then the following ranges can all be anticipated: 1 to 3, 1 to 4, 1 to 5, 2 to 3, 2 to 4, and 2 to 5. In the present disclosure, unless otherwise specified, the numerical range "a to b" indicates an abbreviated representation of any combination of real numbers between a and b, where both a and b are real numbers. For example, the numerical range "0 to 5" indicates that all real numbers between 0 and 5 are listed herein, and "0 to 5" is merely an abbreviated representation of a combination of these numerical values. Additionally, when stating that a parameter is an integer $\geq 2$, it is equivalent to disclosing that the parameter is, for example, an integer of 2, 3, 4, 5, 6, 7, 8, 9, 10, 11, 12, or the like.

Unless otherwise specified, all embodiments and optional embodiments of the present disclosure may be combined with one another to form new technical solutions.

Unless otherwise specified, all technical features and optional technical features of the present disclosure may be combined with one another to form new technical solutions.

Unless otherwise specified, all steps of the present disclosure can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b) and (c), or steps (a), (c) and (b), or steps (c), (a) and (b), or the like.

Currently, as the application range of secondary batteries becomes increasingly widespread, higher demands have been imposed on the performance of secondary batteries. In particular, in the application of the secondary battery, the cycle performance of the battery increasingly fails to meet the demands. Therefore, how to improve the cycle performance of secondary batteries has become an urgent problem to be solved in the art.

In view of this, a first aspect of the embodiments of the present disclosure provides a secondary battery.

The type of the secondary battery is not particularly limited in the present disclosure. For example, the secondary battery may be a lithium-ion battery, or the like. Typically, a secondary battery includes a positive electrode plate, a negative electrode plate, an electrolyte, and the like. During the charging and discharging process of the secondary battery, active ions are intercalated and deintercalated back and forth between the positive electrode plate and the negative electrode plate, and the electrolyte plays a role in conducting active ions between the positive electrode plate and the negative electrode plate. The type of the electrolyte is not particularly limited in the present disclosure, and a choice can be made as needed in practice. For example, the electrolyte may be selected from at least one of a solid-state electrolyte and a liquid-state electrolyte (i.e., an electrolytic solution). Secondary batteries using an electrolytic solution and some secondary batteries using a solid-state electrolyte may further include a separator. The separator is disposed between the positive electrode plate and the negative electrode plate for isolation.

[Negative Electrode Plate]

In the secondary battery of the present disclosure, the negative electrode plate includes a negative electrode current collector and a negative electrode film layer located on at least one surface of the negative electrode current collector and including a negative electrode active material. The negative electrode active material includes a first carbon-based material and a second carbon-based material. The first carbon-based material includes artificial graphite in the form of secondary particles, and the second carbon-based material includes an external region and an internal region located on the inner side of the external region. The external region refers to a region formed by extending from the surface of a particle of the second carbon-based material to the interior of the particle by a distance of 2.5 $\mu$m. In a cross-sectional view of the second carbon-based material, the total pore area of the external region is denoted as $S_1$, the total pore area of the internal region is denoted as S2, and S2 is greater than S1. In the present disclosure, the "internal region" refers to a region in the particles of a material, other than the external region.

In the present disclosure, artificial graphite generally refers to crystalline carbon obtained by graphitization treatment at a high temperature, and generally does not have a pore structure inside, or does not have a pore structure that can be directly observed from a cross-sectional image (for example, a scanning electron microscope image with a magnification of 1000 times).

In the present disclosure, the first carbon-based material includes the artificial graphite in the form of the secondary particles, and the secondary particles exhibit a high degree of isotropy, resulting in little expansion during cycling and a more stable electrode plate structure, which is beneficial for reducing side reactions during cycling and improving the cycle performance of the cell. In another aspect, S2 of the second carbon-based material is greater than S1; that is, the internal region has more pores and/or larger pore sizes, while the external region has fewer pores and/or smaller pore sizes. This indicates that the structure of the external region of the carbon-based material is denser than that of the internal region, and the pore structure of the internal region can reserve the necessary expansion space for the volume change of the particles, thereby reducing the risk of new interface formation caused by particle fracture, reducing the thickness rebound rate of the negative electrode film layer, and further reducing the occurrence of side reactions. The external region having fewer pores and/or smaller pore sizes enables the particles of the second carbon-based material to have a stable structure and minimizes the penetration of electrolytic solution into the pore structure inside the particles of the second carbon-based material, thereby further reducing the occurrence of side reactions and reducing the consumption of active ions due to the formation of SEI film inside the particle. Therefore, by combining the artificial graphite in the form of the secondary particles with the second carbon-based material satisfying S2 > S1, the cycle performance of the secondary battery can be improved.

In some embodiments, the Occhio roughness of the second carbon-based material is less than the Occhio roughness of the first carbon-based material. The artificial graphite in the form of the secondary particles has a relatively large Occhio roughness, with numerous edges and corners on the surface. In addition, the second carbon-based material has a relatively small Occhio roughness, indicating that the surface is relatively smooth. In the present disclosure, by combining the first carbon-based material and the second carbon-based material, graphite particles with different particle sizes and different roughness are mixed together, such that the prepared negative electrode plate can form a better particle stacking effect during cold pressing. This increases the contact area between the particles and improves the adhesion, such that the negative electrode plate achieves higher cohesion. As a result, the expansion of the electrode plate during the graphite ring process can be suppressed, which can further improve the cycle performance of the secondary battery.

In some embodiments, the Occhio roughness of the first carbon-based material is greater than or equal to 0.20, and may be, for example, 0.20, 0.21, 0.22, 0.23, 0.24, 0.25, 0.26, 0.27, 0.28, 0.29, 0.3, 0.31, 0.32, 0.33, 0.34, 0.35, 0.36, 0.37, 0.38, 0.39, 0.40, or any value within a numerical range between any two of the values, preferably 0.25 to 0.40. The Occhio roughness of the second carbon-based material is less than or equal to 0.28, and may be, for example, 0.06, 0.07, 0.08, 0.09, 0.10, 0.12, 0.14, 0.16, 0.18, 0.20, 0.22, 0.24, 0.26, 0.27, or any value within a numerical range between any two of the values, preferably 0.08 to 0.25. By setting the Occhio roughnesses of the first carbon-based material and the second carbon-based material within the above ranges, the particles of the first carbon-based material have numerous edges and corners on the surface and a relatively large particle size, while the second carbon-based material has a relatively smooth surface and a relatively small particle size. The combination of the two is more beneficial for achieving higher cohesion of the negative electrode active material, thereby suppressing the expansion and improving the cycle performance of the secondary battery.

In some embodiments, the specific surface area of the first carbon-based material is 1.1 $m^2$/g to 2.5 $m^2$/g, and may be, for example, 1.1 $m^2$/g, 1.2 $m^2$/g, 1.3 $m^2$/g, 1.4 $m^2$/g, 1.5 $m^2$/g, 1.6 $m^2$/g, 1.7 $m^2$/g, 1.8 $m^2$/g, 1.9 $m^2$/g, 2.0 $m^2$/g, 2.1 $m^2$/g, 2.2 $m^2$/g, 2.3 $m^2$/g, or 2.4 $m^2$/g, preferably 1.2 $m^2$/g to 2.0 $m^2$/g; the specific surface area of the second carbon-based material is 1.0 $m^2$/g to 2.1 $m^2$/g, and may be, for example, 1.0 $m^2$/g, 1.1 $m^2$/g, 1.2 $m^2$/g, 1.3 $m^2$/g, 1.4 $m^2$/g, 1.5 $m^2$/g, 1.6 $m^2$/g, 1.7 $m^2$/g, 1.8 $m^2$/g, 1.9 $m^2$/g, 2.0 $m^2$/g, or 2.1 $m^2$/g, preferably 1.3 $m^2$/g to 1.9 $m^2$/g. By setting the specific surface areas of the first carbon-based material and the second carbon-based material within the above ranges, the consumption of active ions due to the formation of SEI film can be reduced, which is beneficial for improving the cycle performance of the battery.

In some embodiments, the specific capacity of the first carbon-based material is less than the specific capacity of the second carbon-based material.

In some embodiments, the specific capacity of the first carbon-based material is 340 mAh/g to 360 mAh/g, and may be, for example, 342 mAh/g, 343 mAh/g, 344 mAh/g, 345 mAh/g, 346 mAh/g, 347 mAh/g, 348 mAh/g, 349 mAh/g, 350 mAh/g, 351 mAh/g, 352 mAh/g, 354 mAh/g, 356 mAh/g, or 358 mAh/g, preferably 345 mAh/g to 358 mAh/g. The specific capacity of the second carbon-based material is 358 mAh/g to 372 mAh/g, and may be, for example, 359 mAh/g, 360 mAh/g, 361 mAh/g, 362 mAh/g, 364 mAh/g, 366 mAh/g, 368 mAh/g, 370 mAh/g, or 372 mAh/g, preferably 365 mAh/g to 370 mAh/g. By setting the specific capacities of the first carbon-based material and the second carbon-based material within the above ranges, the secondary battery can achieve a higher energy density.

In some embodiments, the number proportion of the artificial graphite in the form of the secondary particles in the first carbon-based material is greater than or equal to 60%, and may be, for example, 62%, 65%, 68%, 70%, 72%, 74%, 76%, 80%, 82%, 84%, 86%, 88%, 90%, or 92%, preferably 70% to 85%. By allowing a large number proportion of the artificial graphite in the form of the secondary particles, high isotropy can be achieved, which can effectively suppress the expansion of the electrode plate during cycling and improve the cycle performance of the battery.

In some embodiments, the degree of graphitization of the first carbon-based material is less than the degree of graphitization of the second carbon-based material. The degree of graphitization of the first carbon-based material is 90.0% to 95.0%, and may be, for example, 90.5%, 91.0%, 91.5%, 92.0%, 92.5%, 93.0%, 93.5%, 94.0%, or 95.0%, preferably 92.0% to 94.0%. The degree of graphitization of the second carbon-based material is 95.0% to 98.0%, and may be, for example, 95.5%, 96%, 96.5%, 97%, or 97.5%, preferably 95.5% to 97.5%. Therefore, the negative electrode material exhibits a high specific capacity and a high powder compaction density.

In some embodiments, the volume distribution particle size Dv50 of the first carbon-based material is less than the volume distribution particle size Dv50 of the second carbon-based material. After thorough mixing of the first carbon-based material with a small particle size and the second carbon-based material with a large particle size, a denser stacking effect can be achieved, which enhances the bonding effect of the particles after cold pressing and reduces the expansion of the electrode plate. Meanwhile, the particle size of the second carbon-based material is within the above range, such that a low specific surface area can be achieved, thereby helping to improve the initial coulombic efficiency of the battery. The volume distribution particle size Dv50 of the first carbon-based material is 8 μm to 18.0 μm, and may be, for example, 9 μm, 10 μm, 11 μm, 12 μm, 13 μm, 14 μm, 15 μm, 16 μm, 17 μm, or 18 μm, preferably 10 μm to 16 μm. In addition, the volume particle size Dv50 of the second carbon-based material is 10.0 μm to 20.0 μm, and may be, for example, 10 μm, 11 μm, 12 μm, 13 μm, 14 μm, 15 μm, 16 μm, 17 μm, 18 μm, 19 μm, or 20 μm, preferably 12.0 μm to 18.0 μm.

In some embodiments, the second carbon-based material includes one or more pore structures with an area greater than or equal to 0.25 $\mu m^2$. By allowing the second carbon-based material to include the pore structure with the above pore area, the pore structure can reserve sufficient and stable expansion space for the volume change of the particles of the second carbon-based material, thereby reducing the risk of particle fracture of the second carbon-based material, reducing the occurrence of side reactions, and improving the cycle performance of the secondary battery.

In some embodiments, preferably, $1.5 \leq S_2/S_1 \leq 500$, $2 \leq S_2/S_1 \leq 450$, $2.2 \leq S_2/S_1 \leq 400$, $2.4 \leq S_2/S_1 \leq 300$, $2.5 \leq S_2/S_1 \leq 250$, $2.6 \leq S_2/S_1 \leq 200$, $2.8 \leq S_2/S_1 \leq 150$, and $3.0 \leq S_2/S_1 \leq 100$. Through further research, the inventors have found that when $S_2/S_1$ also falls within the above range, the secondary battery can better achieve both high energy density and good cycle performance.

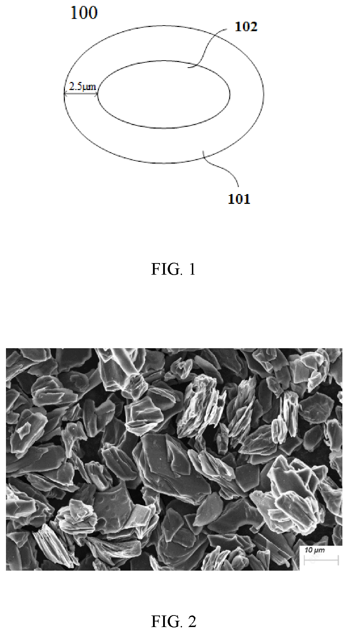

In the present disclosure, the total pore area $S_1$ of the external region and the total pore area $S_2$ of the internal region of the second carbon-based material can be obtained by measuring a cross-sectional image of the second carbon-based material. FIG. 1 is a schematic diagram of a cross-sectional image of a particle of a second carbon-based material 100 according to the present disclosure. As shown in FIG. 1, the region formed by extending from the surface of the particle of the second carbon-based material 100 to the interior of the particle by a distance of 2.5 $\mu m$ is an external region 101, and the region on the inner side of the external region 101 is an internal region 102.

In the present disclosure, for the pore area and the values of S1 and S2 of the second carbon-based material, a cross-section of the second carbon-based material can be acquired by using a cross-section polisher (for example, an IB-09010 CP argon ion cross-section polisher from JEOL Ltd., Japan); then, with reference to JY/T010-1996, the cross-section of the second carbon-based material is scanned by using a scanning electron microscope (for example, a Sigma 300 scanning electron microscope from ZEISS, Germany); and finally, a pore area of any pore in the second carbon-based material, a total pore area $S_2$ of the internal region, and a total pore area $S_1$ of the external region are separately acquired by using image processing software (for example, AVIZO), and a value of $S_2/S_1$ is thus acquired.. Illustratively, samples may be obtained from different regions of the negative electrode plate in the secondary battery, at least 5 (e.g., 5, 10, 15, or even more) positions are randomly selected from the sample to acquire the cross-sections by using a cross-section polisher. The cross-sections of at least 10 particles (e.g., 10, 20, 50, or even more particles) are randomly selected from scanning electron microscope images of the cross-sections, and the total pore area S2' of the internal region and the total pore area S1' of the external region of each particle cross-section are acquired by using image processing software according to the above definition, thereby obtaining the value of S2'/S1' of each particle cross-section. The arithmetic mean value of S2'/S1' of all measured particle cross-sections is calculated as the $S_2/S_1$ value of the second carbon-based material.

In some embodiments, the area of the pore structure in the external region of the second carbon-based material is less than or equal to 0.15 $\mu m^2$, optionally less than or equal to 0.13 $\mu m^2$. Through further research, the inventors have also found that by controlling the area of the pore structure in the external region of the second carbon-based material within the above range, a dense structure can be achieved in the external region of the second carbon-based material, thereby effectively improving the structural stability of the second carbon-based material, minimizing the penetration of the electrolytic solution into the pore structure inside the particles of the second carbon-based material, and further effectively improving the cycle performance of the secondary battery. Certainly, the present disclosure is not intended to limit the area of all the pore structures in the external region of the second carbon-based material to be less than or equal to 0.15 $\mu m^2$. For example, more than 95%, optionally more than 99%, of the pore structures may be controlled to have an area less than or equal to 0.15 $\mu m^2$.

In some embodiments, the internal region of the second carbon-based material includes one or more pore structures with an area greater than or equal to 0.25 $\mu m^2$. Through further research, the inventors have also found that by allowing the internal region of the second carbon-based material to include the pore structure with the above size, in one aspect, sufficient and stable expansion space can be reserved for the volume change of the particles of the second carbon-based material, and the occurrence of side reactions can be reduced, and in another aspect, the compaction density of the negative electrode film layer can be improved, and the volume change of the negative electrode film layer can be buffered.

In some embodiments, the powder compaction density of the first carbon-based material under a pressure of 50,000 N is greater than or equal to 1.85 $g/cm^3$, optionally 1.88 $g/cm^3$ to 2.00 $g/cm^3$. Therefore, a higher powder compaction density is beneficial for achieving a higher energy density of the electrode plate.

In some embodiments, the tap density of the first carbon-based material is 0.8 $g/cm^3$ to 1.1 $g/cm^3$, optionally 0.85 $g/cm^3$ to 1.05 $g/cm^3$. Therefore, the stacking effect can be improved after mixing with the second carbon-based material.

In some embodiments, [(Dv90)-(Dv10)]/(Dv50)] of the first carbon-based material is 0.8 to 1.5, optionally 0.9 to 1.4. Therefore, a narrower [(Dv90)-(Dv10)]/(Dv50)] indicates a lower proportion of large particles and small particles in the first carbon-based material, which is beneficial to the stability of the electrical performance.

In some embodiments, the adsorption amount of linseed oil by 100 g of the first carbon-based material is 50 ml to 70 ml, optionally 55 ml to 65 ml. Therefore, the fluidity of the slurry is improved through the combination with the second carbon-based material.

In some embodiments, the powder compaction density of the second carbon-based material under the pressure of 50,000 N is 1.80 $g/cm^3$ to 2.10 $g/cm^3$, optionally 1.85 $g/cm^3$ to 2.08 $g/cm^3$. Therefore, a higher powder compaction density is beneficial for achieving a higher energy density of the electrode plate.

In some embodiments, the tap density of the second carbon-based material is 0.95 g/cm$^3$ to 1.30 g/cc g/cm$^3$, optionally 1.00 g/cm$^3$ to 1.25 g/cc g/cm$^3$, such that high tap density may improve the stacking effect of the particles.

In some embodiments, [(Dv90)-(Dv10)]/(Dv50)] of the above second carbon-based material is 0.70 to 1.10, optionally 0.75 to 1.05. Therefore, it indicates a lower proportion of large particles and small particles in the second carbon-based material, which ensures the stability of the electrical performance.

In some embodiments, the volume particle size Dv90 of the second carbon-based material is 13.0 $\mu$m to 30.0 $\mu$m, optionally 16.0 $\mu$m to 23.0 $\mu$m. Therefore, the proportion of large particles is low, thereby ensuring the stability of the electrical performance.

In some embodiments, the adsorption amount of linseed oil by 100 g of the second carbon-based material is 40 mL to 60 mL, optionally 40 mL to 55 mL. Therefore, a lower adsorption amount of linseed oil indicates better fluidity of the slurry prepared from the second carbon-based material.

In some embodiments, a coating layer is provided on at least part of the surface of the second carbon-based material. Optionally, the coating layer includes carbon. Optionally, 80% or more of the surface of the second carbon-based material is covered with the carbon coating layer; further, 90% to 100% of the surface of the second carbon-based material is covered with the carbon coating layer. In some embodiments, the carbon in the above coating layer includes amorphous carbon and/or crystalline carbon having a degree of graphitization between 68% and 90%. Therefore, by providing the coating layer on at least part of the surface of the second carbon-based material, the kinetics performance of the secondary battery can be further improved.

In some embodiments, the second carbon-based material includes primary particles. Optionally, the number proportion of primary particles in the second carbon-based material is greater than or equal to 80%, and may be, for example, 80% to 100%, 90% to 100%, or 95% to 100%. By allowing the second carbon-based material to include the primary particles in the above proportion, high structural stability of the second carbon-based material can be achieved, and the occurrence of side reactions can be reduced, thereby improving the cycle performance of the secondary battery.

In some embodiments, the content of the second carbon-based material in the negative electrode active material is 20 wt% to 80 wt%, optionally 40 wt% to 60 wt%. By allowing the content of the second carbon-based material to be within the above range, the secondary battery can achieve excellent cycle performance.

In some embodiments, when the negative electrode active material in the negative electrode film layer further includes a silicon-based material, the content of the silicon-based material is greater than or equal to 5 wt%, and may be, for example, 5 wt%, 10 wt%, 15 wt%, 20 wt%, 25 wt%, 30 wt%, 35 wt%, or 40 wt%, preferably 10 wt% to 30 wt%. Therefore, the kinetics performance and the energy density of the secondary battery can be improved while maintaining good cycle performance of the secondary battery.

In some embodiments, the above negative electrode film layer further optionally includes a negative electrode conductive agent. The present disclosure does not particularly limit the type of the negative electrode conductive agent. As an example, the negative electrode conductive agent may include one or more of superconducting carbon, conductive graphite, acetylene black, carbon black, Ketjen black, a carbon dot, a carbon nanotube, graphene, and a carbon nanofiber.

In some embodiments, the above negative electrode film layer further optionally includes a negative electrode binder. The present disclosure does not particularly limit the type of the negative electrode binder. As an example, the negative electrode binder may include one or more of styrene-butadiene rubber (SBR), water-soluble unsaturated resin SR-1B, aqueous acrylic resin (e.g., polyacrylic acid PAA, polymethacrylic acid PMAA, or sodium polyacrylate PAAS), polyacrylamide (PAM), polyvinyl alcohol (PVA), sodium alginate (SA), and carboxymethyl chitosan (CMCS).

In some embodiments, the above negative electrode film layer further optionally includes other auxiliary agents. As an example, other auxiliary agents may include thickeners, such as sodium carboxymethylcellulose (CMC) and PTC thermistor materials.

In some embodiments, a metal foil or a composite current collector may be used as the above negative electrode current collector. As an example of the metal foil, a copper foil may be used. The above composite current collector may include a polymer material base layer and a metal material layer formed on at least one surface of the above polymer material base layer. As an example, the above metal material may include one or more of copper, a copper alloy, nickel, a nickel alloy, titanium, a titanium alloy, silver, and a silver alloy. As an example, the above polymer material base layer may include one or more of polypropylene (PP), polyethylene terephthalate (PET), polybutylene terephthalate (PBT), polystyrene (PS), and polyethylene (PE).

The negative electrode current collector is provided with two surfaces opposite to each other in its own thickness direction, and the negative electrode film layer is disposed on any one or both of the two opposite surfaces of the negative electrode current collector. It should be noted that the parameters of the negative electrode film layer provided in the present disclosure (e.g., compaction density, areal density, and thickness) refer to the parameters of the negative electrode film layer on one side of the negative electrode current collector. When the negative electrode film layer is disposed on both sides of the negative electrode current collector, if the parameters of the negative electrode film layer on either side meet the requirements of the present disclosure, it shall be considered to fall within the protection scope of the present disclosure.

In the present disclosure, the above negative electrode plate may further include other additional functional layers in addition to the above negative electrode film layer. For example, in some embodiments, the negative electrode plate further includes a conductive bottom coating (e.g., composed of a conductive agent and a binder) interposed between the above negative electrode current collector and the above negative electrode film layer and disposed on the surface of the above negative electrode current collector. In some embodiments, the negative electrode plate further includes a protective layer covering the surface of the above negative electrode film layer.

In the present disclosure, the Occhio roughness of the material (e.g., the first carbon-based material or the second carbon-based material) has a meaning well known in the art, and can be measured using methods known in the art. For example, it can be measured and calculated by using Occhio Callisto 3D software. An exemplary measurement method is as follows: the graphite particles to be measured are dispersed; a high-contrast and high-definition image is obtained, through photographing, using Occhio Callisto 3D software, so as to delineate the specific morphology and boundary of the graphite particles and determine the projection area of the particles; and a smooth reference object is defined by checking the maximum inscribed circle of the original contour pixel included in the contour of a corresponding pixel. The inscribed circle with a radius equal to 80% of the smooth reference object is continuously inscribed within the projection area of the particle, and the total area of the inscribed circle is defined as the 80% reference object. The ratio of the 80% smooth reference object to the particle projection area is between 0 and 1, and a larger ratio indicates that the surface morphology of the measured particle is closer to being smooth. Taking 80% of the maximum radius of the inscribed circle as the radius of the reference object allows for better definition and quantification of the final Occhio roughness value. The Occhio roughness according to the present disclosure refers to 1 minus the ratio of the 80% smooth reference object to the particle projection area, which can indicate the sphericity parameter (surface roughness) of the particle material. A larger Occhio roughness value indicates higher surface roughness of the material.

In the present disclosure, the specific capacity of the material (e.g., the first carbon-based material, the second carbon-based material, or the negative electrode film layer) has a meaning well known in the art, and can be measured using methods known in the art. An exemplary determination method is as follows: The sample powder, a conductive agent carbon black (Super P), and a binder polyvinylidene fluoride (PVDF) are mixed uniformly in a mass ratio of 91.6:1.8:6.6 in a solvent N-methylpyrrolidone (NMP) to obtain a slurry; the prepared slurry is applied to a surface of a negative electrode current collector copper foil and dried in an oven for later use; ethylene carbonate (EC), ethyl methyl carbonate (EMC), and diethyl carbonate (DEC) are mixed in a volume ratio of 1:1:1 to obtain an organic solvent, and then $LiPF_6$ is dissolved in the above organic solvent to prepare an electrolytic solution with a concentration of 1 mol/L; then, a CR2430 button battery is assembled using the electrolytic solution in an argon-protected glove box with a metallic lithium foil as the counter electrode and a polyethylene (PE) thin film as the separator; the obtained button battery is left to stand for 12 h, then discharged at a constant current of 0.05C to 0.005 V at 25 °C, left to stand for 10 min, then discharged at a constant current of 50 μA to 0.005 V, left to stand for 10 min, and then discharged at a constant current of 10 μA to 0.005 V, and then charged at a constant current of 0.1C to 2 V, and the charge capacity is recorded. The ratio of the charge capacity to the mass of the sample is defined as the specific capacity of the corresponding material (e.g., the first carbon-based material or the second carbon-based material).

In the present disclosure, the specific surface area of the material (e.g., the first carbon-based material or the second carbon-based material) has a meaning well known in the art, and can be measured using instruments and methods known in the art. For example, the specific surface area of the material can be measured using the analysis and test method of specific surface area by nitrogen adsorption with reference to GB/T 19587-2017, and calculated by the BET (Brunauer Emmett Teller) method. The testing instrument may be the Tri-Star 3020 specific surface area pore size analysis tester from Micromeritics, USA.

In the present disclosure, the volume distribution particle sizes Dv10, Dv50, and Dv90 of the material (e.g., the first carbon-based material or the second carbon-based material) have meanings well known in the art, which respectively represent the particle sizes corresponding to the cumulative volume distribution percentages of the material reaching 10%, 50%, and 90%, and can be measured using instruments and methods known in the art. For example, the measurement may be performed with reference to GB/T 19077-2016 using a laser particle size analyzer. The testing instrument may be the Mastersizer 3000 laser particle size analyzer from Malvern Instruments Ltd., UK.

In the present disclosure, the degree of graphitization of the material (e.g., the first carbon-based material or the second carbon-based material) has a meaning well known in the art, and can be measured using instruments and methods known in the art. For example, an X-ray diffractometer (e.g., Bruker D8 Discover) may be used for the measurement. The measurement may be performed with reference to JIS K 0131-1996 and JB/T 4220-2011 to obtain the average interlayer spacing $d_{002}$ of the C(002) plane in the crystal structure of the material, and then the degree of graphitization is calculated according to the formula g = (0.344 - $d_{002}$)/(0.344 - 0.3354) $\times$ 100%. In the above formula, $d_{002}$ is the average interlayer spacing of the C(002) crystal plane in the crystal structure of the material in nanometers (nm).

In the present disclosure, the powder compaction density of the material (e.g., the first carbon-based material or the second carbon-based material) has a meaning well known in the art, and can be measured using instruments and methods known in the art. For example, the measurement may be performed with reference to GB/T 24533-2009 using an electronic compression tester (e.g., UTM7305 electronic compression tester). An exemplary measurement method is as follows: 1 g of sample powder is weighed out, the sample powder is placed into a mold with a base area of 1.327 cm$^2$, the pressure is increased to 50,000 N and held for 30 s, then the pressure is released and held for 10 s, and subsequently the powder compaction density of the material under the pressure of 50,000 N is recorded and calculated.

In the present disclosure, the tap density of the material (e.g., the first carbon-based material or the second carbon-based material) has a meaning well known in the art, and can be measured using instruments and methods known in the art. For example, the measurement can be performed with reference to GB/T 5162-2006 using a powder tap density analyzer. The testing instrument may be the Bettersize BT-301, with the following parameters: vibration frequency of 250 ± 15 times/minute, amplitude of 3 ± 0.2 mm, total vibrations of 5,000 times, and graduated cylinder volume of 25 mL.

In the present disclosure, the oil absorption value of the material (e.g., the first carbon-based material or the second carbon-based material) has a meaning well known in the art, and can be measured using instruments and methods known in the art. For example, reference may be made to GB/T 3780.2-2017. Specifically, 20 g of the dried test sample is weighed and placed into a mixing chamber of an oil absorption meter, the temperature of the mixing chamber is maintained at 23 °C, and the mixing chamber is covered with a lid. An oil delivery outlet of the constant-velocity burette is aligned above the orifice of the mixing chamber lid. The oil absorption meter is started, the instrument starts operation, and linseed oil is added by dripping. As the oil absorption amount of the sample increases, the mixture changes from a free flowing state into a semi-plastic agglomerate, and the viscosity of the mixture continuously increases. Then, this viscosity is transmitted to a torque sensor system of the oil absorption meter. When the dripped oil causes the semi-plastic agglomerate to reach a preset torque level, the oil absorption meter and the constant-velocity burette shut down automatically. The value corresponding to 70% of the maximum torque of the fitted curve is read, and the adsorption amount A of linseed oil by 100 g of carbon material is calculated using the formula A = (V/m) × 100, where V represents the volume (expressed in ml) of linseed oil consumed by the sample at 70% of the maximum torque, and m represents the mass (expressed in g) of the added sample.

In the present disclosure, both the primary particles and the secondary particles have meanings well known in the art. The primary particle refers to the particle in a non-agglomerated state. The secondary particle refers to the particle in an agglomerated state formed by the aggregation of two or more primary particles. The primary particles and the secondary particles can be distinguished by using scanning electron microscope (SEM) images.

In the present disclosure, the number proportion of the artificial graphite in the form of the secondary particles in the first carbon-based material is determined as follows: A test sample is randomly selected from the negative electrode film layer, a plurality of test regions are randomly selected from the test sample, and images of the plurality of test regions are acquired using a scanning electron microscope. The number proportion of the artificial graphite in the form of the secondary particles in the total number of the particles of the first carbon-based material is counted in each image. The average value of the plurality of statistical results is taken as the number proportion of the artificial graphite in the form of the secondary particles in the first carbon-based material.

In the present disclosure, the number proportion of the primary particles in the second carbon-based material is determined as follows: A test sample is randomly selected from the negative electrode film layer, a plurality of test regions are randomly selected from the test sample, and images of the plurality of test regions are acquired using a scanning electron microscope. The number proportion of the second carbon-based materials exhibiting a primary particle morphology in the total number of the particles of the second carbon-based material is counted in each image. The average value of the plurality of statistical results is taken as the number proportion of the primary particles in the second carbon-based material.

It should be noted that various parameter tests for the negative electrode active material or the negative electrode film layer described above may be performed by sampling from a prepared secondary battery according to the following steps.

The secondary battery is subjected to a discharge process (for safety reasons, the secondary battery is typically in a fully discharged state). After disassembly of the secondary battery, the negative electrode plate is extracted and immersed in dimethyl carbonate for a certain period (e.g., 2 h to 10 h). The negative electrode plate is then removed and subjected to a drying process at a certain temperature for a certain duration (e.g., 60 °C for more than 4 h). After drying, the negative electrode plate is collected. In this case, samples can be taken from the dried negative electrode plate to test the above parameters related to the negative electrode film layer, such as density, specific capacity, and specific surface area of the negative electrode film layer.

The dried negative electrode plate described above is then baked at a certain temperature for a certain duration (e.g., 400 °C for more than 2 h). From the baked negative electrode plate, a region is randomly selected, and sampling of the negative electrode active material is performed (e.g., using a blade to scrape for powder collection). The collected negative electrode active material is sieved (e.g., using a 200-mesh sieve), so as to ultimately obtain samples that can be used to test the negative electrode active material parameters described above.

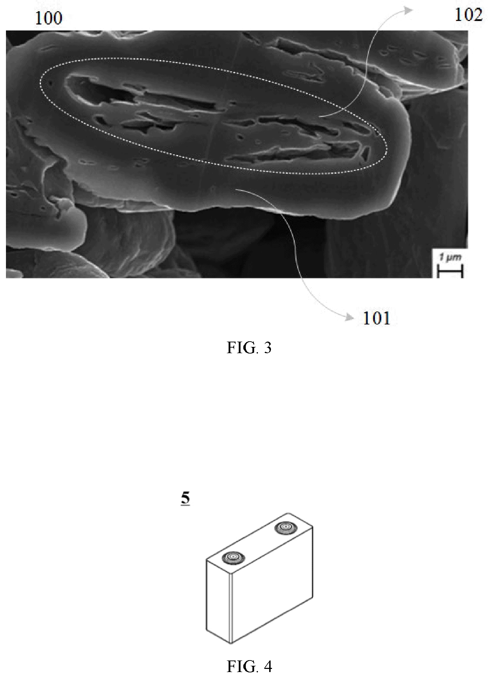

The first carbon-based material and the second carbon-based material can be distinguished by a scanning electron microscope (SEM) or an ion-polished cross section (CP) image. The first carbon-based material and the second carbon-based material can be distinguished from the image. FIG. 2 is an SEM image of the first carbon-based material according to the present disclosure, from which it can be seen that the first carbon-based material exhibits a secondary particle morphology. FIG. 3 is an ion-polished cross section (CP) image of the second carbon-based material according to the present disclosure, from which it can be seen that the external region of the second carbon-based material has a dense structure, while the internal region has numerous pore structures.

In the present disclosure, the first carbon-based material mentioned above may be commercially available.

In some embodiments, a preparation method for the second carbon-based material includes: step 1, providing a raw material having a plurality of pore structures; step 2, uniformly mixing the raw material and a filling material according to a predetermined proportion, holding the mixture at a first temperature $T_1$ for a first duration $t_1$, and then cooling the mixture to room temperature to obtain an intermediate; and step 3, holding the obtained intermediate at a second temperature $T_2$ for a second duration $t_2$, after which the second carbon-based material is obtained.

In some embodiments, in step 1, the raw material used for preparing the second carbon-based material includes natural graphite. Natural graphite generally refers to graphite naturally formed in nature, which does not require graphitization, and the interior of the natural graphite particles usually contains numerous closed pore structures. Optionally, the above natural graphite includes one or more of flake graphite, natural spherical graphite, and microcrystalline graphite, and more optionally includes natural spherical graphite.

The "natural spherical graphite" refers to natural graphite having a spherical or spheroidal shape, and not all natural graphite particles are controlled to be ideal spheres. In some embodiments, flake graphite may be pretreated to obtain natural spherical graphite with a desired particle size and desired morphology. Optionally, the above pretreatment includes processes such as crushing, classification, spheroidization, and purification.

In some embodiments, in step 1, the volume distribution particle size Dv50 of the above raw material may be 10.5.0 $\mu$m to 19.5 $\mu$m.

In some embodiments, in step 1, the specific surface area of the raw material may be greater than or equal to 2.5 $m^2/g$, optionally 2.5 $m^2/g$ to 10.0 $m^2/g$. When the specific surface area of the raw material is within the above range, it is beneficial for performing subsequent filling treatment and obtaining the second carbon-based material with the required specific surface area, and it is also beneficial for simultaneously achieving high capacity and high initial coulombic efficiency of the second carbon-based material. In addition, it is also beneficial for achieving better kinetics performance of the second carbon-based material.

In some embodiments, in step 2, the softening point temperature of the above filling material is 100 °C to 150 °C. Optionally, the softening point temperature of the above filling material is 100 °C to 146 °C, 100 °C to 142 °C, 100 °C to 138 °C, 100 °C to 134 °C, 100 °C to 130 °C, 104 °C to 146 °C, 104 °C to 142 °C, 104 °C to 138 °C, 104 °C to 134 °C, or 104 °C to 130 °C.

In some embodiments, in step 2, the volume distribution particle size Dv50 of the above filling material is less than or equal to 6 $\mu$m, optionally 1 $\mu$m to 6 $\mu$m, 1 $\mu$m to 5 $\mu$m, 2 $\mu$m to 5 $\mu$m, or 3 $\mu$m to 5 $\mu$m. Therefore, it is beneficial to filling the pore structure of the raw material with molten filling materials and to improving the dispersion uniformity of the filling materials and the raw material.

In some embodiments, in step 2, the coke yield of the above filling material is 15% to 40%, optionally 18% to 34%. In the present disclosure, the coke yield of the filling material has a meaning well known in the art, and can be determined by instruments and methods known in the art. For example, the determination may be performed with reference to GB/T 8727-2008.

In some embodiments, in step 2, the above filling material includes one or more of coal pitch, petroleum pitch, polymer compound, and resin, and optionally includes one or more of coal pitch and petroleum pitch.

In some embodiments, in step 2, the mass ratio of the filling material to the raw material is (11-34):100, optionally (12-33):100, (12-30):100, (12-28):100, or (14-25):100.

In step 2, by adjusting one or more parameters of the filling material such as the type, the softening point, the coke yield, and the addition amount within the above ranges, it is beneficial to adjusting the number and/or size of pores in the external region and the internal region of the first carbon-based material within an appropriate range, thereby facilitating the adjustment of $S_2/S_1$ of the first carbon-based material within an appropriate range.

By adjusting parameters such as the type, the softening point, the coke yield, and the addition amount of the filling material within the above ranges, the molten filling material has low viscosity and good fluidity and is less likely to bond the raw material particles, such that the agglomeration of the raw material particles in the subsequent preparation process can be reduced, thereby further reducing problems such as an increase in surface defects and an increase in surface active sites of the first carbon-based material particles due to the need to add a depolymerization process.

In some embodiments, in step 2, the heating process of heating a uniform mixture of the above raw material and the above filling material in a predetermined ratio to the first temperature $T_1$ may be a staged heating process.

In some embodiments, the above staged heating process includes a first heating process, a second heating process, and a third heating process.

In some embodiments, the above first heating process is to raise the temperature to 200 °C to 250 °C and hold the temperature for 0.5 h to 3 h.

In some embodiments, the above second heating process is to raise the temperature to 450 °C to 550 °C and hold the temperature for 0 h to 2 h. When the holding time is 0 h, it means that when the temperature is raised to a range of 450 °C to 550 °C, no holding process is conducted, and the temperature continues to be raised to the first temperature $T_1$.

In some embodiments, the above third heating process is to raise the temperature to the first temperature $T_1$ and hold the temperature for the first duration $t_1$.

In the staged heating process, the temperature is first raised to 200 °C. Since the heating temperature is higher than the softening point temperature of the filling material, in this case, the filling material melts and softens upon heating, and a 1 h holding time allows the filling material to flow and fill into the pore structure of the raw material; then the temperature is raised to 500 °C, and in this case, the molten and softened filling material undergoes a carbonization reaction and gradually forms a semi-coke state to become a viscous liquid or solid, thereby preventing the filling material from entering all of the pore structures of the raw material; finally, the temperature is raised to the first temperature, and in this case, the filling material undergoes a carbonization reaction, thereby enabling the pore structures occupied by the filling material to be effectively filled.

In some embodiments, in step 2, the temperature is raised to the above first temperature $T_1$ at a rate of 1 °C/min to 10 °C/min. For example, the heating rate may be 1 °C/min, 2 °C/min, 3 °C/min, 4 °C/min, 5 °C/min, 6 °C/min, 7 °C/min, 8 °C/min, 9 °C/min, 10 °C/min, or in a range formed by any of the above values. Optionally, the heating rate is 1.5 °C/min to 8 °C/min, 1.5 °C/min to 6 °C/min, 2 °C/min to 6 °C/min, or 2 °C/min to 5 °C/min.

In some embodiments, the heating rate of the above first heating process may be 1 °C/min to 10 °C/min, optionally 1.5 °C/min to 8 °C/min, 1.5 °C/min to 6 °C/min, 2 °C/min to 6 °C/min, or 2 °C/min to 5 °C/min. In some embodiments, the heating rate of the above second heating process may be 1 °C/min to 10 °C/min, optionally 2 °C/min to 8 °C/min. In some embodiments, the heating rate of the above third heating process may be 1 °C/min to 10 °C/min, optionally 2 °C/min to 8 °C/min.

In some embodiments, in step 2, the above first temperature $T_1$ is 1100 °C to 1400 °C. For example, the first temperature $T_1$ may be 1100 °C, 1150 °C, 1200 °C, 1250 °C, 1300 °C, 1350 °C, 1400 °C, or in a range formed by any of the above numerical values. Optionally, the first temperature $T_1$ is 1100 °C to 1400 °C, 1100 °C to 1350 °C, 1100 °C to 1350 °C, 1100 °C to 1300 °C, 1100 °C to 1250 °C, or 1100 °C to 1200 °C.

In some embodiments, in step 2, the above first duration $t_1$ is 1 h to 5 h. For example, the first duration $t_1$ may be 1 h, 1.5 h, 2 h, 2.5 h, 3 h, 3.5 h, 4 h, 4.5 h, 5 h, or in a range formed by any of the above values. Optionally, the above first duration $t_1$ is 2 h to 4 h.

In some embodiments, in step 2, the thermal treatment may be performed in a medium-frequency furnace, a roller kiln, a rotary kiln, a pusher kiln, a vertical pellet mill, a horizontal pellet mill, a vertical reaction kettle, a horizontal reaction kettle, a drum furnace, or other temperature-programmable devices.

In some embodiments, in step 2, the thermal treatment atmosphere may be a protective gas atmosphere. The above protective gas may include one or more of nitrogen, argon, and helium.

In step 2, by adjusting one or more of the heating rate, the first temperature, the first duration, the heating process, and the like within the above ranges, it is beneficial for adjusting the number of pores and/or the pore size in the external region and the internal region of the second carbon-based material within an appropriate range, thereby helping to adjust the $S_2/S_1$ value of the second carbon-based material within an appropriate range.

In some embodiments, in step 3, the above second temperature $T_2$ is 1600 °C to 3000 °C. Optionally, the above second temperature $T_2$ is 1600 °C to 2800 °C, 1650 °C to 2750 °C, 1650 °C to 2700 °C, 1700 °C to 2650 °C, 1750 °C to 2600 °C, 1850 °C to 2550 °C, 1950 °C to 2550 °C, or 1950 °C to 2500 °C.

In some embodiments, in step 3, the above second duration $t_2$ is 1.5 h to 6 h. For example, the second duration $t_1$ may be 2 h, 2.5 h, 3 h, 3.5 h, 4 h, 4.5 h, 5 h, 5.5 h, 6 h, or in a range formed by any of the above values. Optionally, the above second duration $t_2$ is 2 h to 5 h.

In some embodiments, in step 3, the above thermal treatment may be performed in a medium-frequency furnace, a box-type graphitization furnace, an Acheson graphitization furnace, a continuous graphitization furnace, or an internal series graphitization furnace.

In some embodiments, in step 3, the medium-frequency furnace and the continuous graphitization thermal treatment atmosphere may be a protective gas atmosphere. The protective gas may include one or more of argon and helium.

In step 3, by adjusting one or more of the second temperature and the second duration within the above ranges, it is beneficial for adjusting the content of disordered carbon in the second carbon-based material within an appropriate range, thereby helping the second carbon-based material to achieve an appropriate degree of graphitization, interlayer spacing, and the like.

In the above preparation method for the second carbon-based material, by adjusting one or more of the parameters of the natural graphite, the parameters of the filling material, the heating rate, the first temperature, the first duration, the heating process, the second temperature, the second duration, and the like within the above ranges, it is beneficial for adjusting the parameters of the second carbon-based material, such as $S_2/S_1$, degree of graphitization, specific capacity, particle size, specific surface area, and Occhio roughness.

[Positive Electrode Plate]

In some embodiments, the above positive electrode plate includes a positive electrode current collector and a positive electrode film layer disposed on at least one surface of the above positive electrode current collector. For example, the above positive electrode current collector is provided with two surfaces opposite to each other in its own thickness direction, and the above positive electrode film layer is disposed on any one or both of the two opposite surfaces of the above positive electrode current collector.

A metal foil or a composite current collector may be used as the above positive electrode current collector. As an example of the metal foil, an aluminum foil may be used. The above composite current collector may include a polymer material base layer and a metal material layer formed on at least one surface of the above polymer material base layer. As an example, the above metal material may include one or more of aluminum, an aluminum alloy, nickel, a nickel alloy, titanium, a titanium alloy, silver, and a silver alloy. As an example, the above polymer material base layer may include one or more of polypropylene (PP), polyethylene terephthalate (PET), polybutylene terephthalate (PBT), polystyrene (PS), and polyethylene (PE).

The above positive electrode film layer generally includes a positive electrode active material, an optional binder, and an optional conductive agent. The above positive electrode film layer is generally formed by coating the above positive electrode current collector with a positive electrode slurry, drying, and cold pressing. The above positive electrode slurry is generally formed by dispersing a positive electrode active material, an optional conductive agent, an optional binder, and any other components in a solvent and stirring them uniformly. The solvent may be N-methylpyrrolidone (NMP), but is not limited thereto. As an example, the binder for use in the positive electrode film layer may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylic resin. As an example, the conductive agent for use in the positive electrode film layer includes one or more of superconducting carbon, conductive graphite, acetylene black, carbon black, Ketjen black, a carbon dot, a carbon nanotube, graphene, and a carbon nanofiber.

The above positive electrode active material may be any positive electrode active material well known in the art for use in secondary batteries.

When the secondary battery of the present disclosure is a lithium-ion battery, the above positive electrode active material the above positive electrode active material may include, but is not limited to, one or more of a lithium-containing transition metal oxide, a lithium-containing phosphate, and respective modified compounds thereof. Examples of the above lithium transition metal oxide may include, but are not limited to, one or more of a lithium cobalt oxide, a lithium nickel oxide, a lithium manganese oxide, a lithium nickel cobalt oxide, a lithium manganese cobalt oxide, a lithium nickel manganese oxide, a lithium nickel cobalt manganese oxide, a lithium nickel cobalt aluminum oxide, and respective modified compounds thereof. Examples of the above lithium-containing phosphate may include, but are not limited to, one or more of lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon, and respective modified compounds thereof.

In some embodiments, in order to further improve the energy density of the secondary battery, the positive electrode active material for use in the lithium-ion battery may include one or more of lithium transition metal oxides with a general formula of $Li_aNi_bCo_cM_dO_eA_f$ and modified compounds thereof, where $0.8 \le a \le 1.2$, $0.5 \le b < 1$, $0 < c < 1$, $0 < d < 1$, $1 \le e \le 2$, $0 \le f \le 1$, M is selected from one or more of the group consisting of Mn, Al, Zr, Zn, Cu, Cr, Mg, Fe, V, Ti, and B, and A is selected from one or more of the group consisting of N, F, S, and Cl.

In some embodiments, as an example, the positive electrode active material for use in the lithium-ion battery may include one or more of $LiCoO_2$, $LiNiO_2$, $LiMnO_2$, $LiMn_2O_4$, $LiNi_{1/3}Co_{1/3}Mn_{1/3}O_2$ (NCM333), $LiNi_{0.5}Co_{0.2}Mn_{0.3}O_2$ (NCM523), $LiNi_{0.6}Co_{0.2}Mn_{0.2}O_2$ (NCM622), $LiNi_{0.8}Co_{0.1}Mn_{0.1}O_2$ (NCM811), $LiNi_{0.85}Co_{0.15}Al_{0.05}O_2$, $LiFePO_4$, and $LiMnPO_4$.

In the present disclosure, the modified compounds of the above positive electrode active materials may be obtained by doping modification and/or surface-coating modification of the above positive electrode active materials.

[Electrolyte]

In some embodiments, the above electrolyte is an electrolytic solution, where the above electrolytic solution includes an electrolyte salt and a solvent.

The types of the above electrolyte salt are not particularly limited, and a choice can be made as needed in practice.

When the secondary battery of the present disclosure is a lithium-ion battery, as an example, the above electrolyte salt may include one or more of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalato)borate (LiBOB), lithium difluorophosphate ($LiPO_2F_2$), lithium difluorobis(oxalato)phosphate (LiDFOP), and lithium tetrafluoro(oxalato)phosphate (LiTFOP).

The types of the above solvent are not particularly limited, and a choice can be made as needed in practice. In some embodiments, as an example, the above solvent may include one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethyl methyl sulfone (EMS), and diethyl sulfone (ESE).

In some embodiments, the above electrolytic solution further optionally includes an additive. For example, the above additive may include a negative electrode film-forming additive or a positive electrode film-forming additive, or may include an additive capable of improving certain properties of the secondary battery, such as an additive for improving the overcharge performance of the secondary battery, an additive for improving the high-temperature performance of the secondary battery, or an additive for improving the low-temperature power performance of the secondary battery.

[Separator]

The present disclosure does not particularly limit the type of the above separator, and any porous-structure separator known to have good chemical stability and mechanical stability may be selected.

In some embodiments, the material of the above separator may include one or more of glass fiber, non-woven fabric, polyethylene, polypropylene, and polyvinylidene fluoride. The above separator may be a single-layer film or a multi-layer composite film. When the above separator is a multi-layer composite film, the materials of the layers are the same or different.

In some embodiments, the above positive electrode plate, the above separator, and the above negative electrode plate may be manufactured into an electrode assembly through a winding process or a stacking process.

In some embodiments, the above secondary battery may include an outer packaging. The outer packaging can be used for packaging the electrode assembly and electrolyte described above.

In some embodiments, the outer packaging may be a hard housing, such as a hard plastic housing, an aluminum housing, or a steel housing. The outer packaging may also be a soft pack, such as a pouch-type soft pack. The above soft pack may be made of plastic, such as one or more of polypropylene (PP), polybutylene terephthalate (PBT), and polybutylene succinate (PBS).

The shape of the secondary battery is not particularly limited in the present disclosure and may be cylindrical, prismatic, or any other shape. FIG. 4 shows a secondary battery 5 having a prismatic structure as one example.

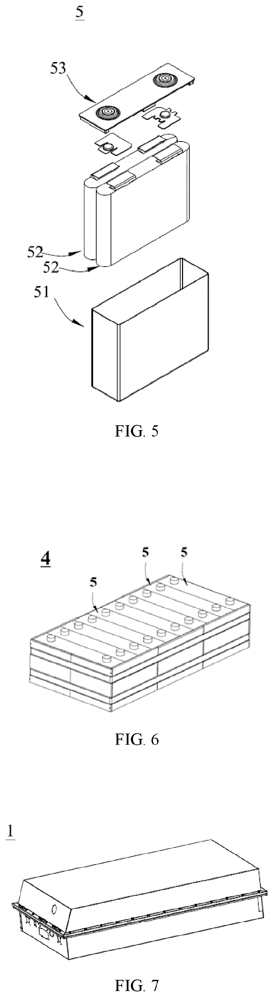

In some embodiments, as shown in FIG. 5, the outer packaging may include a housing 51 and a cover plate 53. The housing 51 may include a bottom plate and side plates connected to the bottom plate. The bottom plate and the side plates define, in an enclosing manner, an accommodating cavity. The housing 51 is provided with an opening communicating with the accommodating cavity, and the cover plate 53 is configured to lid the above opening to close the above accommodating cavity. The positive electrode plate, the negative electrode plate, and the separator may be subjected to a winding process or a stacking process to form an electrode assembly 52. The electrode assembly 52 is packaged in the above accommodating cavity. The electrolytic solution is infiltrated into the electrode assembly 52. The number of electrode assemblies 52 included in the secondary battery 5 may be one or more and may be adjusted as needed.

The preparation method for the secondary battery of the present disclosure is well known. In some embodiments, a positive electrode plate, a separator, a negative electrode plate, and an electrolytic solution may be assembled to form a secondary battery. As an example, the positive electrode plate, the separator, and the negative electrode plate may form an electrode assembly through a winding process or a stacking process. The electrode assembly is placed in an outer packaging, dried, and then injected with electrolytic solution. After undergoing processes such as vacuum packaging, standing, formation, and shaping, a secondary battery is obtained.

In some embodiments of the present disclosure, the secondary battery according to the present disclosure may be assembled into a battery module. The number of secondary batteries included in the battery module may be plural, and the specific number may be adjusted based on the application and capacity of the battery module.

FIG. 6 is a schematic view of a battery module 4 as one example. As shown in FIG. 6, in the battery module 4, a plurality of secondary batteries 5 may be sequentially arranged in the length direction of the battery module 4. Certainly, the arrangement may also be in any other manner. Further, the plurality of secondary batteries 5 may be fixed by a fastener.

Optionally, the battery module 4 may further include a shell having an accommodating space in which the plurality of secondary batteries 5 are accommodated.

In some embodiments, the above battery module may further be assembled into a battery pack; the number of the battery modules included in the battery pack may be adjusted based on the application and capacity of the battery pack.

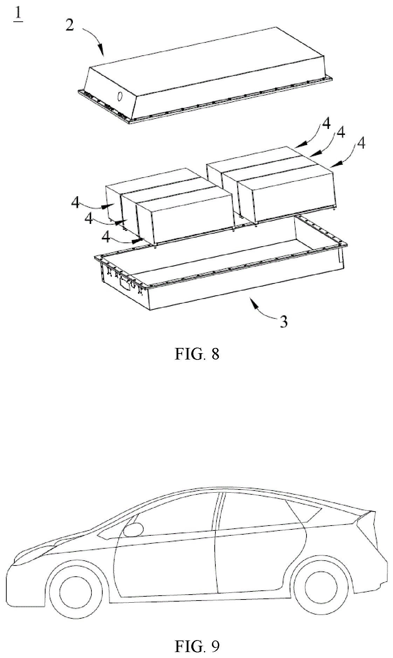

FIGs. 7 and 8 are schematic views of a battery pack 1 as one example. As shown in FIGs. 7 and 8, the battery pack 1 may include a battery case and a plurality of battery modules 4 arranged in the battery case. The battery case includes an upper case body 2 and a lower case body 3. The upper case body 2 is configured to lid the lower case body 3 and the two form a closed space for accommodating the battery modules 4. The plurality of battery modules 4 may be arranged in any manner in the battery case.

The present disclosure further provides an electric device. The above electric device includes at least one of the secondary battery, the battery module, or the battery pack according to the present disclosure. The secondary battery, the battery module, or the battery pack described above may be used as a power source for the above electric device, and they may also be used as an energy storage unit for the above electric device. The above electric device may be, but is not limited to, a mobile device (e.g., a mobile phone, a tablet computer, or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, ship, or satellite, an energy storage system, or the like.

A secondary battery, a battery module, or a battery pack may be selected based on the use requirements of the above electric device.

FIG. 9 is a schematic diagram of an electric device as one example. The electric device is a pure electric vehicle, a hybrid electric vehicle, a plug-in hybrid electric vehicle, or the like. To meet the requirements of the electric device for high power and high energy density, a battery pack or a battery module may be used.

As another example, the electric device may be a mobile phone, a tablet computer, a notebook computer, or the like. The electric device is generally required to be light and thin, and a secondary battery may thus be used as the power source.

Examples

The following examples more specifically describe the content disclosed in the present disclosure. These examples are intended for illustrative purposes only, since various modifications and changes within the scope of the content disclosed in the present disclosure will be apparent to those skilled in the art. Unless otherwise stated, all parts, percentages, and ratios reported in the following examples are based on mass, and all reagents used in the examples are commercially available or synthesized according to conventional methods and can be used directly without further treatment, and the instruments used in the examples are commercially available.

Preparation of First Carbon-Based Material

Material 1-1

Needle coke precursor was coarsely crushed, crushed, and shaped. The main machine frequency of a crushing and shaping machine was 55 Hz, resulting in an Intermediate 1 with a particle size of 10 $\mu$m. Then, the Intermediate 1 and pitch (softening point: 250 °C) were mixed in a ratio of 100:15 and granulated in a heating device to obtain Intermediate 2 with a particle size of 15 $\mu$m. The Intermediate 2 was placed in a graphitization furnace and subjected to graphitization heat treatment at 3000 °C. After that, the product undergoes demagnetization and sieving to obtain artificial graphite in the form of the secondary particles.

The properties of the obtained artificial graphite in the form of the secondary particles were as follows: volume distribution particle size Dv50 = 15.0 $\mu$m, Occhio roughness = 0.30, and degree of graphitization = 94%.

Material 1-2 to material 1-5

The preparation methods for materials 1-2 to 1-5 are similar to the preparation method for material 1-1, except that the main machine frequency of the crushing and shaping machine is adjusted to obtain the materials 1-2 to 1-5.

Table 1

| Serial number | Main machine frequency (Hz) | Occhio roughness |
|---|---|---|
| Material 1-2 | 67 | 0.19 |
| Material 1-3 | 65 | 0.20 |

(continued)

| Serial number | Main machine frequency (Hz) | Occhio roughness |
|---|---|---|
| Material 1-4 | 60 | 0.25 |
| Material 1-5 | 20 | 0.45 |

Preparation of Second Carbon-Based Material

Material 2-1

Flake graphite was mechanically crushed and spheroidized, where 20 shaping machines were used in the spheroidization step, resulting in a spheroidized particle size of 18 $\mu$m. Then, purification treatment is performed to obtain natural spherical graphite. The obtained natural spherical graphite was mixed with a filler petroleum pitch (softening point: 110 °C) in a ratio of 100:22, and then the mixed material was placed in a device capable of continuously heating up, heated to 200 °C and held for 1 h, and then continuously heated to 700 °C and held for 1 h. After that, the mixed material was cooled to room temperature to obtain an intermediate. The obtained intermediate was placed in a graphitization furnace and subjected to graphitization heat treatment at 2500 °C, and then subjected to demagnetization and sieving to obtain a second carbon-based material.

The properties of the obtained second carbon-based material were as follows: S2/S1 = 15, volume distribution particle size Dv50 = 18.0 $\mu$m, Occhio roughness = 0.10, and degree of graphitization = 96%.

$S_2/S_1$ of the second carbon-based material was measured by the following method.

The binder for sample preparation was mixed uniformly with the second carbon-based material powder and then applied to a copper foil, and the copper foil was dried at 60 °C for 30 min for later use. Five samples to be measured with a size of 6 mm × 6 mm were cut from five different positions and respectively pasted on a sample stage of a CP-type argon ion cross-section polisher. The samples were cut using a plasma beam to obtain the cross sections of the samples. The testing instrument may be the IB-09010 CP argon ion cross-section polisher from JEOL Ltd., Japan.

A scanning electron microscope was used to scan each sample cross section of the second carbon-based material, and a scanning image was obtained from randomly selected regions of each sample cross section. For the test, reference may be made to JY/T010-1996. The testing instrument may be the Sigma 300 scanning electron microscope from ZEISS, Germany.

Cross sections of 20 particles of the second carbon-based material were randomly selected from the scan image. The region formed by extending from the surface of the particle of the second carbon-based material to the interior of the particle by a distance of 0.25 $\mu$m was denoted as the external region, and the region on the inner side of the external region was denoted as the internal region. The total pore area S1' of the external region of each particle cross section and the pore area S2' of the internal region of the second carbon-based material were acquired using image processing software, and the value of S2'/S1' was calculated; the arithmetic mean value of S2'/S1' for all 20 particles was calculated as the S2/S1 value of the second carbon-based material. The image processing software might be AVIZO.

Material 2-2 to material 2-5

The preparation methods for materials 2-2 to 2-5 are similar to the preparation method for material 2-1, except that the number of shaping machines used in the spheroidization process is adjusted to obtain the materials 2-2 to 2-5.

Table 2

| Serial number | Number of shaping machines in the spheroidization process | Occhio roughness |
|---|---|---|
| Material 2-2 | 22 sets | 0.08 |
| Material 2-3 | 15 sets | 0.25 |
| Material 2-4 | 13 sets | 0.28 |
| Material 2-5 | 10 sets | 0.33 |

Material 3:

Needle coke precursor was coarsely crushed, crushed, and shaped to obtain Intermediate 1 with a particle size of 15 $\mu$m. The Intermediate 1 was placed in a graphitization furnace and subjected to graphitization heat treatment at 3000 °C. After that, the product undergoes demagnetization and sieving to obtain artificial graphite in the form of primary particles.

The properties of the obtained artificial graphite in the form of the primary particles were as follows: volume distribution particle size Dv50 = 15.0 $\mu$m, and degree of graphitization = 94.2%.

Example 1

Preparation of Secondary Battery

A negative electrode active material (the material 1-1 and the material 2-1 mixed in a mass ratio of 1:1), a conductive agent carbon black (Super P), a thickener sodium carboxymethylcellulose, and a binder styrene-butadiene rubber were thoroughly stirred and mixed in an appropriate amount of deionized water solvent according to a weight ratio of 96.4:1:1.2:1.4 to form a negative electrode slurry. The negative electrode slurry was applied on two surfaces of a negative electrode current collector copper foil, and the copper foil was then subjected to drying and cold pressing to obtain the negative electrode plate.

Lithium iron phosphate, the conductive agent carbon black (Super P), and a binder polyvinylidene fluoride were mixed in a weight ratio of 96:2:2, and an appropriate amount of NMP solvent was added. The mixture was stirred uniformly to obtain a positive electrode slurry. The positive electrode slurry was applied to two surfaces of a positive electrode current collector aluminum foil, and the aluminum foil was then subjected to drying and cold pressing to obtain the positive electrode plate.

Ethylene carbonate (EC), ethyl methyl carbonate (EMC), and diethyl carbonate (DEC) were mixed in a volume ratio of 1:1:1 to obtain an organic solvent. Then, $LiPF_6$ was dissolved in the above organic solvent to prepare an electrolytic solution with a concentration of 1 mol/L.

A polyethylene film was used as a separator. The separator, the positive electrode plate, and the negative electrode plate prepared above were stacked in sequence to enable the separator to be disposed between the positive electrode plate and the negative electrode plate for isolation, and then the stack was wound to obtain an electrode assembly. The electrode assembly was placed in an outer packaging, dried, and then injected with the electrolytic solution. After undergoing processes such as vacuum packaging, standing, formation, and shaping, a secondary battery was obtained.

Comparative Example 1

The preparation method of Comparative Example 1 is similar to that of Example 1, except that the negative electrode active material is obtained by mixing the material 3 and the material 2-1 in a mass ratio of 1:1.

Performance Test

(1) Expansion rate of electrode plate

Samples were taken from the negative electrode plates prepared in the above examples and comparative examples. The thickness of the negative electrode film was measured along a cutting plane using a micrometer, and recorded as the initial thickness of the negative electrode film. The secondary batteries prepared in the above examples and comparative examples were charged at a constant current of 1/3C to 3.65 V, and then charged at a constant voltage to 0.05C. The batteries were then disassembled. The thickness of the negative electrode film was measured again and recorded as the full-charge thickness of the negative electrode film, and the full-charge expansion rate of the electrode plate was calculated as: full-charge expansion rate of the electrode plate = (full-charge thickness of the negative electrode film - initial thickness of the negative electrode film)/cold-pressed thickness of the electrode plate $\times$ 100%.

(2) Cycle performance test of secondary battery

At 45 °C, the secondary batteries prepared above were charged at a constant current of 1C to 3.65 V (corresponding to 100% SOC), and then charged at a constant voltage to a current of 0.05C. Then, the secondary batteries were left to stand for 5 min, and then discharged at a constant current of 1C to 2.5 V (corresponding to 0% SOC). The discharge capacity at this point, i.e., the discharge capacity of the first cycle, was recorded. The secondary batteries were subjected to a cyclic charge-discharge test according to the above method, and the discharge capacity after each cycle was recorded.

Capacity retention rate (%) of the secondary battery after 1000 cycles at 45 °C = discharge capacity after 1000 cycles/ discharge capacity of the first cycle $\times$ 100%.

Table 3

| Serial number | Negative electrode active material | | Performance test | |
|---|---|---|---|---|
| | First carbon-based material | Second carbon-based material | Full-charge expansion rate of electrode plate | Capacity retention rate after 1000 cycles at 45 °C |
| Example 1 | Material 1-1 | Material 2-1 | 18.0% | 89.5% |
| Comparative Example 1 | Material 3 | Material 2-1 | 22.5% | 85.3% |

As can be seen from the results in Table 1, by allowing the negative electrode active material in the negative electrode film layer to include both the first carbon-based material (artificial graphite in the form of the secondary particles) and the second carbon-based material, the present disclosure achieves a low electrode plate expansion rate, and the secondary battery obtains excellent cycle performance. In contrast, in Comparative Example 1, when the artificial graphite in the form of the primary particles is used in combination with the second carbon-based material, the high degree of anisotropy of the primary particles results in significant electrode plate expansion. During cycling, this leads to SEI fracture and the formation of a fresh interface, thereby causing poor cycle performance.

Examples 2 to 5

Secondary batteries were prepared using the same preparation method as in Example 1, except that the type of the first carbon-based material was changed as shown in Table 4. The specific parameters and test results are shown in Table 4.

It should be noted that, for ease of comparison, the results of Example 1 are also shown in Table 4.

Table 4

| Serial number | Negative electrode active material | | | | Performance test | |
|---|---|---|---|---|---|---|
| | First carbon-based material | | Second carbon-based material | | Full-charge expansion rate of electrode plate | Capacity retention rate after 1000 cycles at 45 °C |
| | Type | Occhio roughness | Type | Occhio roughness | | |
| Example 1 | Material 1-1 | 0.30 | Material 2-1 | 0.10 | 18.0% | 89.5% |
| Example 2 | Material 1-2 | 0.19 | Material 2-1 | 0.10 | 19.4% | 87.9% |
| Example 3 | Material 1-3 | 0.20 | Material 2-1 | 0.10 | 19.0% | 88.2% |
| Example 4 | Material 1-4 | 0.25 | Material 2-1 | 0.10 | 18.8% | 88.9% |
| Example 5 | Material 1-5 | 0.45 | Material 2-1 | 0.10 | 18.6% | 89.1% |

As can be seen from the results in Table 4, the cycle performance can be further improved by allowing the Occhio roughness of the second carbon-based material to be less than the Occhio roughness of the first carbon-based material and allowing the Occhio roughness of the first carbon-based material to be greater than or equal to 0.20.

Examples 6 to 9

Secondary batteries were prepared using the same preparation method as in Example 1, except that the type of the second carbon-based material was changed as shown in Table 5. The specific parameters and test results are shown in Table 5.

It should be noted that, for ease of comparison, the results of Example 1 are also shown in Table 5.

Table 5

| Serial number | Negative electrode active material | | | | Performance test | |
|---|---|---|---|---|---|---|
| | First carbon-based material | Occhio roughness | Second carbon-based material | Occhio roughness | Full-charge expansion rate of electrode plate | Capacity retention rate after 1000 cycles at 45 °C |
| Example 1 | Material 1-1 | 0.30 | Material 2-1 | 0.10 | 18.0% | 89.5% |
| Example 6 | Material 1-1 | 0.30 | Material 2-2 | 0.08 | 18.3% | 89.0% |
| Example 7 | Material 1-1 | 0.30 | Material 2-3 | 0.25 | 18.7% | 88.3% |
| Example 8 | Material 1-1 | 0.30 | Material 2-4 | 0.28 | 19.9% | 88.0% |
| Example 9 | Material 1-1 | 0.30 | Material 2-5 | 0.33 | 20.4% | 87.0% |

As can be seen from the results in Table 5, compared with Example 9, Examples 1 and 6 to 8 show that the cycle performance can be further improved by allowing the Occhio roughness of the second carbon-based material to be less than the Occhio roughness of the first carbon-based material. Further, by allowing the Occhio roughness of the second carbon-based material to be less than or equal to 0.28, the improvement of the cycle performance is facilitated.

It should be noted that the present disclosure is not limited to the embodiments described above. The embodiments described above are merely examples, and any embodiments having a structure substantially identical to the technical concept and exerting the same functional effects within the scope of the technical solutions of the present disclosure are all included within the technical scope of the present disclosure. Furthermore, without departing from the spirit of the present disclosure, various modifications that can be conceived by those skilled in the art to the embodiments, as well as other embodiments formed by combining some of the constituent elements of the embodiments, are also included within the scope of the present disclosure.

## Claims

1. A secondary battery, comprising a negative electrode plate, wherein the negative electrode plate comprises a negative electrode current collector and a negative electrode film layer located on at least one surface of the negative electrode current collector and comprising a negative electrode active material,

    the negative electrode active material comprises a first carbon-based material and a second carbon-based material;
    the first carbon-based material comprises artificial graphite in the form of secondary particles; and
    the second carbon-based material comprises an external region and an internal region located on an inner side of the external region, wherein the external region refers to a region formed by extending from a surface of a particle of the second carbon-based material to an interior of the particle by a distance of 2.5 $\mu$m; and in a cross-sectional view of the second carbon-based material, a total pore area of the external region is denoted as S1, a total pore area of the internal region is denoted as S2, and S2 is greater than S1.

2. The secondary battery according to claim 1, wherein Occhio roughness of the second carbon-based material is less than Occhio roughness of the first carbon-based material.

3. The secondary battery according to claim 1 or 2, wherein

    the Occhio roughness of the first carbon-based material is greater than or equal to 0.20, optionally 0.25 to 0.4; and/or
    the Occhio roughness of the second carbon-based material is less than or equal to 0.28, optionally 0.08 to 0.25.

4. The secondary battery according to any one of claims 1 to 3, wherein
    a specific surface area of the first carbon-based material is 1.1 m$^2$/g to 2.5 m$^2$/g, optionally 1.2 m$^2$/g to 2.0 m$^2$/g; and/or
    a specific surface area of the second carbon-based material is 1.0 m$^2$/g to 2.1 m$^2$/g, optionally 1.3 m$^2$/g to 1.9 m$^2$/g.

5. The secondary battery according to any one of claims 1 to 4, wherein a specific capacity of the first carbon-based material is less than a specific capacity of the second carbon-based material.

6. The secondary battery according to any one of claims 1 to 5, wherein

the specific capacity of the first carbon-based material is 340 mAh/g to 360 mAh/g, optionally 345 mAh/g to 358 mAh/g; and/or

the specific capacity of the second carbon-based material is 358 mAh/g to 372 mAh/g, optionally 365 mAh/g to 370 mAh/g.

7. The secondary battery according to any one of claims 1 to 6, wherein a number proportion of the artificial graphite in the form of the secondary particles in the first carbon-based material is greater than or equal to 60%, optionally 70% to 85%.

8. The secondary battery according to any one of claims 1 to 7, wherein a degree of graphitization of the first carbon-based material is less than a degree of graphitization of the second carbon-based material.

9. The secondary battery according to any one of claims 1 to 8, wherein

the degree of graphitization of the first carbon-based material is 90.0% to 95.0%, optionally 92.0% to 94.0%; and/or

the degree of graphitization of the second carbon-based material is 95.0% to 98.0%, optionally 95.5% to 97.5%.

10. The secondary battery according to any one of claims 1 to 9, wherein a volume distribution particle size Dv50 of the first carbon-based material is less than a volume distribution particle size Dv50 of the second carbon-based material.

11. The secondary battery according to any one of claims 1 to 10, wherein

the volume distribution particle size Dv50 of the first carbon-based material is 8.0 $\mu$m to 18.0 $\mu$m, optionally 10.0 $\mu$m to 16.0 $\mu$m; and/or

the volume particle size Dv50 of the second carbon-based material is 10.0 $\mu$m to 20.0 $\mu$m, optionally 12.0 $\mu$m to 18.0 $\mu$m.

12. The secondary battery according to any one of claims 1 to 11, wherein

an area of a pore structure in the external region of the second carbon-based material is less than or equal to 0.15 $\mu$m$^2$, optionally less than or equal to 0.13 $\mu$m$^2$; and/or

the internal region of the second carbon-based material comprises one or more pore structures with an area greater than or equal to 0.15 $\mu$m$^2$, and optionally comprises one or more pore structures with an area of 0.15 $\mu$m$^2$ to 2.0 $\mu$m$^2$.

13. The secondary battery according to any one of claims 1 to 12, wherein $1.5 \leq S2/S1 \leq 500$, optionally $2 \leq S2/S1 \leq 450$.

14. The secondary battery according to any one of claims 1 to 13, wherein the second carbon-based material comprises primary particles; and optionally, a number proportion of the primary particles in the second carbon-based material is greater than or equal to 80%.

15. The secondary battery according to any one of claims 1 to 14, wherein the first carbon-based material satisfies at least one of the following conditions:

(1) powder compaction density of the first carbon-based material under a pressure of 50,000 N is greater than or equal to 1.85 g/cm$^3$, optionally 1.88 g/cm$^3$ to 2.00 g/cm$^3$;

(2) tap density of the first carbon-based material is 0.8 g/cm$^3$ to 1.1 g/cm$^3$, optionally 0.85 g/cm$^3$ to 1.05 g/cm$^3$;

(3) [(Dv90)-(Dv10)]/(Dv50)] of the first carbon-based material is 0.8 to 1.5, optionally 0.9 to 1.4; and

(4) an adsorption amount of linseed oil by 100 g of the first carbon-based material is 50 ml to 70 ml, optionally 55 ml to 65 ml.

16. The secondary battery according to any one of claims 1 to 15, wherein the second carbon-based material satisfies at least one of the following conditions:

(1) powder compaction density of the second carbon-based material under a pressure of 50,000 N is 1.80 g/cm$^3$ to 2.10 g/cm$^3$, optionally 1.85 g/cm$^3$ to 2.08 g/cm$^3$;

(2) tap density of the second carbon-based material is 0.95 g/cm$^3$ to 1.30 g/cm$^3$, optionally 1.00 g/cm$^3$ to 1.25 g/cm$^3$;

(3) [(Dv90)-(Dv10)]/(Dv50)] of the second carbon-based material is 0.70 to 1.10, optionally 0.75 to 1.05;

(4) a volume particle size Dv90 of the second carbon-based material is 13.0 $\mu$m to 30.0 $\mu$m, optionally 16.0 $\mu$m to 25.0 $\mu$m; and

(5) an adsorption amount of linseed oil by 100 g of the second carbon-based material is 40 mL to 60 mL, optionally 40 mL to 55 mL.

17. The secondary battery according to any one of claims 1 to 16, wherein a mass content of the second carbon-based material in the negative electrode active material is 20 wt% to 80 wt%, optionally 40 wt% to 60 wt%.

18. The secondary battery according to any one of claims 1 to 17, wherein
the negative electrode active material further comprises a silicon-based material; and optionally, in the negative electrode active material, a content of the silicon-based material is greater than or equal to 5 wt%, more optionally 10 wt% to 30 wt%.

19. An electric device, comprising the secondary battery according to any one of claims 1 to 18.

FIG. 1

FIG. 2

100 102

FIG. 3

5

FIG. 4

<u>5</u>

FIG. 5

<u>4</u>

FIG. 6

<u>1</u>

FIG. 7

FIG. 8

FIG. 9

## INTERNATIONAL SEARCH REPORT

| | International application No. |
|---|---|
| | **PCT/CN2024/095830** |

| A. | CLASSIFICATION OF SUBJECT MATTER |
|---|---|

H01M10/0525(2010.01)i; H01M4/133(2010.01)i; H01M4/13(2010.01)i

According to International Patent Classification (IPC) or to both national classification and IPC

| B. | FIELDS SEARCHED |
|---|---|

Minimum documentation searched (classification system followed by classification symbols)

    IPC: H01M10/-; H01M4/-

Documentation searched other than minimum documentation to the extent that such documents are included in the fields searched

Electronic data base consulted during the international search (name of data base and, where practicable, search terms used)

    CNTXT, ENTXTC, DWPI, CNKI: 电池, 外部, 表面, 壳, 内部, 核, 孔, 石墨, 碳基, battery, external, surface, shell, internal, core, pore, graphite, carbon based

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 117063306 A (CONTEMPORARY AMPEREX TECHNOLOGY CO., LTD.) 14 November 2023 (2023-11-14)<br>    description, paragraphs [0014]-[0020], [0041]-[0052], [0080], and [0318]-[0323], and embodiment 4 | 1, 4-19 |
| Y | CN 115642233 A (BEIJING WELION NEW ENERGY TECHNOLOGY CO., LTD.) 24 January 2023 (2023-01-24)<br>    description, paragraphs [0007] and [0014]-[0019] | 1, 4-19 |
| Y | CN 114464774 A (BYD CO., LTD.) 10 May 2022 (2022-05-10)<br>    description, embodiments 1-13, and table 1 | 1, 4-19 |
| A | CN 114267823 A (ZHUHAI COSMX BATTERY CO., LTD.) 01 April 2022 (2022-04-01)<br>    entire document | 1-19 |
| A | JP 2000223121 A (TDK CORP. et al.) 11 August 2000 (2000-08-11)<br>    entire document | 1-19 |
| A | US 2023231134 A1 (CONTEMPORARY AMPEREX TECHNOLOGY CO., LTD.) 20 July 2023 (2023-07-20)<br>    entire document | 1-19 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **05 August 2024** | **13 August 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/095830**

| Patent document cited in search report | | | Publication date (day/month/year) | Patent family member(s) | | | Publication date (day/month/year) |
|---|---|---|---|---|---|---|---|
| CN | 117063306 | A | 14 November 2023 | None | | | |
| CN | 115642233 | A | 24 January 2023 | None | | | |
| CN | 114464774 | A | 10 May 2022 | None | | | |
| CN | 114267823 | A | 01 April 2022 | None | | | |
| JP | 2000223121 | A | 11 August 2000 | None | | | |
| US | 2023231134 | A1 | 20 July 2023 | WO | 2023082157 | A1 | 19 May 2023 |
| | | | | EP | 4207372 | A1 | 05 July 2023 |

Form PCT/ISA/210 (patent family annex) (July 2022)

## REFERENCES CITED IN THE DESCRIPTION

**Patent documents cited in the description**

- CN 202311643117

**Non-patent literature cited in the description**

- *GB/T 19587-2017*
- *GB/T 19077-2016*
- *GB/T 24533-2009*
- *GB/T 5162-2006*
- *GB/T 3780.2-2017*
- *GB/T 8727-2008*